# EUROPEAN PATENT SPECIFICATION

(11) **EP 1 465 485 B1**
(45) Date of publication and mention of the grant of the patent: **26.04.2006**
(21) Application number: 02781307.0
(22) Date of filing: 06.11.2002
(51) Int. Cl.: A01N 25/14

(54) **NANOPARTICLES COMPRISING A CROP PROTECTION AGENT**
NANOPARTIKEL ENTHALTEND EIN PFLANZENSCHUTZMITTEL
NANOPARTICULES COMPRENANT UN AGENT PHYTOSANITAIRE

(30) Priority: 07.11.2001 US 331058 P
(43) Date of publication of application: 13.10.2004
(73) Proprietor: BASF Aktiengesellschaft, 67056 Ludwigshafen (DE)
(72) Inventor: SCHROF, Wolfgang, 67271 Neuleiningen (DE); HEGER, Robert, 67551 Worms (DE); BRATZ, Matthias, 67933 Maxdorf (DE); ZAGAR, Cyrill, 68167 Mannheim (DE); HORN, Dieter, 69120 Heidelberg (DE); KOLTZENBURG, Sebastian, 67125 Dannstadt-Schauernheim (DE)
(74) Representative: Isenbruck, Günter
(86) International application number: PCT/EP2002/012399
(87) International publication number: WO 2003/039249

(56) References cited:
- EP-A- 0 875 143
- WO-A-98/16105
- WO-A-02/082900
- US-B1- 6 210 696

## Description

The present invention relates to solid crop protection formulations comprising at least one random radical copolymer and at least one crop protection agent selected from the group consisting of herbicides, pesticides and fungicides, with the proviso that cinidon-ethyl is not included, dispersion formulations prepared from said solid crop protection formulations, a process for preparing said solid crop protection formulations and said dispersion formulations and the use of said crop protection formulations in agriculture.

### Background of the invention

Crop protection agents are usually administered in form of aqueous systems, because of the availability of said aqueous systems to interact with a biosystem, such as plants, fungi or insects. In the case of crop protection agents which are not soluble in an aqueous enviroment, as well as in the case of those which are only poorly water-soluble, effective administration of the crop protection agent can be difficult due to inadequate bioavailability of the crop protection agent and consequent low activity in crop protection. These solubility problems affect many parameters of administration, for example the method of administration, the rate of administration and the concentration of administration.

It is known that the rate of dissolution of drug particles, such as crop protection agents, can be increased by increasing the surface area of the solid, i.e., decreasing the particle size.

Consequently, methods of making aqueous dispersion formulations containing finely divided drugs have been studied and efforts have been made to control the size range of drug particles in dispersion formulations containing crop protection agents.

Dispersions of particles are generally obtained in two different ways.

Standard grinding processes starting from solid bulk materials do not result in particles with average diameters less than 0.5 µm. Particle size and distribution depend on a variety of parameters like the type of mill or the crushing parts (e.g. silica) used. A further problem is to remove the crushing parts after milling. If smaller grinding fractions are needed, often the smaller crushing parts and grinding dust are left in the product yielding a heterogeneous system. Because of the larger particle size of milled materials it is more difficult to find additives to stabilize a dispersion of these particles against agglomeration, flocculation, sedimentation and flotation.

An alternative is to start from the molecular solution and to form particles by precipitation. This process faces problems from Ostwald ripening (crystal growth) and/or particle agglomeration again resulting in sedimentation and/or flotation. Generally, the precipitation process is induced in a nucleation stage by changing the compatibility with the surrounding medium (solvent system), e.g., by changing or mixing of solvents, changes in pH value, temperature, pressure, or concentration.

In order to stabilize particular systems, surface-active additives have to be used to inhibit crystal growth and agglomeration in a particle size of nanometers. Typical additives are low molecular weight surfactants or oligomers yielding so-called micelles with the drawback of very small content of substrate molecules. Solubilisates show no nucleation process at the beginning of particle formation but a micellar solution process of the substrate by the surfactant molecules. Unfortunately, the solvation power of the surfactants can induce nucleation and crystal growth because of better transportation of substrate molecules through the solvent medium.

High molecular weight additives are e.g. protective colloids, amphiphilic copolymers, thickeners, etc.. Whereas protective colloids stabilize particles against agglomeration by coating the particle surfaces forming a repulsive interaction (steric and/or electrostatic) between particles and inhibit growth by blocking growing sites at the particle surface, thickeners stabilize kinetically by slowing down diffusion and particle collision rates.

In any case, these complex interactions in the colloidal state make it nearly impossible to predict an effective additive for a given substrate to stabilize neither from theoretical calculations nor from formulation experience.

WO 97/13503 discloses a method for synthesizing nanoparticles comprising combining an agent and a matrix to form a composite mixture (nanocomposite powder), which can be rehydrated. Said nanoparticles are less than about 5000 nm, preferably less than about 400 nm, more preferably less than about 250 nm. Suitable agents that can be formulated into nanoparticles include pesticide agents among others. The spray drying step involves spray drying different concentrations of the drug dissolved in dimethyl sulfoxide, 1-methyl-2-pyrrolidinone, ethanol or water, with or without surfactants, sugars, and stabilizers. The matrix is formed from a matrix material comprising a carbohydrate, a protein, an inorganic salt, a resin, or a lipid. Said resin is selected from the group consisiting of polyvinyl pyrrolidone, polyvinyl alcohol, polyacrylic acid, polyethylene, polymethacrylate, polyamide, poly[ethylene-vinyl acetate], and shellac. Prefererably the nanoparticles comprise ethyl 3,5-diacetamido-2,4,6-triiodobenzoate as a diagnostic agent or an antiinflammatory agent or an antibiotic agent.

EP-A 0 275 796 discloses a process for the production of colloidal dispergable systems by formation of nanoparticles. The process comprises mixing a first liquid phase of a solution of a compound, for example an biologically active compound in a solvent and optionally a surfactant and a second liquid phase of a non solvent for said compound and optionally a surfactant, wherein the non-solvent is miscible with the solvent of the first liquid phase. By mixing the two liquid phases a colloidal suspension of nanoparticles is obtained. The particle size of said nanoparticles is at most 500 nm.

WO 98/16105 discloses solid nanoparticular formulations for solid crop protection agents, which are suitable for the preparation of liquid formulations with high activities. Said solid formulations, substantially comprising a) one ore more predominantly amorphous crop protection agent(s) with less than 500 mg/l water solubility at 25 °C and b) a coating layer surrounding the constituent (a). Said solid nanoparticular formulations are prepared by mixing a liquid formulation of the crop protection agent with a liquid formulation of the coating layer and subsequently drying the resulting coated crop protection agent The particle size of the obtained dispersed particles is from 0.05 to 2 µm (50 to 2000 nm). Said coating layer comprises surface active polymeric colloids or surface active oligomeric, amphiphilic compounds or mixtures of both. Preferably biopolymers or modified biopolymers are employed. It is also possible to use synthetic anionic, cationic and neutral polymers, as well as anionic, cationic, non ionic, amphoteric or polymeric surface active compounds.

An object of the present invention is to provide solid crop protection formulations comprising at least one copolymer and at least one crop protection agent selected from the group consisting of herbicides, pesticides and fungicides, with the proviso that cinidon-ethyl is not included, wherein said crop protection agent is dispersed in nanoparticular form when said solid crop protection formulation is redispersed in an aqueous medium.

### Summary of the invention

The present invention provides novel solid crop protection formulations, aqueous dispersion formulations and formulation conditions able to disperse at least one crop protection agent selected from the group consisting of herbicides, pesticides and fungicides, with the proviso that cinidon-ethyl is not included, in a stable nanoparticular form (nanodispersions) in an aqueous medium. Stable particles are defined as particles that do not crystallize, aggregate, flocculate, or precipitate out of the aqueous medium for a period of time depending on the application.

Said novel solid crop protection formulations comprising
a) at least one crop protection agent selected from the group consisting of herbicides, pesticides and fungicides, with the proviso that cinidon-ethyl is not included;
b) at least one random radical copolymer essentially consisting of
   a) 30 to 60 % by weight of styrene as component A;
   b) 30 to 60 % by weight of DMAPMAM (dimethylaminopropyl methacrylic amide) as component B;
   c) 0 to 60 % by weight of methyl acrylate and/or vinyl acetate as component C, and
c) optionally further additives,
wherein at least 50 % of the dispersed particles of the at least one crop protection agent in said solid crop protection formulation are in an X-ray amorphous state.

The average particle size reported in terms of hydrodynamic radius (r_{H}) of the dispersed particles of the at least one crop protection agent in said dispersion formulations is from 10-500 nm, preferably from 10-300 nm, more preferably from 10-150 nm. The average particle size may be characterized by light scattering measurements, especially Fiber Optic DLS measurements (FODLS), as described in detail later in the specification.

The solid crop protection formulations are preferably obtained by
a) mixing a solution of at least one random radical copolymer as defined before comprising as polymerized units at least one hydrophilic monomer and at least one hydrophobic monomer in at least one first organic solvent and a solution *of at least one* crop protection agent selected from the group consisting of herbicides, pesticides and fungicides, with the proviso that cinidon-ethyl is not included, in at least one second organic solvent which may be the same as or different from said first organic solvent, or dissolving a mixture of at least one random radical copolymer as defined before comprising as polymerized units at least one hydrophilic monomer and at least one hydrophobic monomer and the at least one crop protection agent in at least one organic solvent, wherein optionally further additives may be added to the organic solvent(s); and
b) removing the organic solvent(s) e.g. by spray drying, vacuum drying, lyophilization or in a fluidized bed dryer.

In another embodiment of the present invention the solid crop protection formulations are obtained by a process comprising the steps of
a) mixing a solution of at least one crop protection agent selected from the group consisting of herbicides, pesticides and fungicides, with the proviso that cinidon-ethyl is not included, in at least one organic solvent which is miscible with water and an aqueous solution of at least one random radical copolymer as defined before comprising as polymerized units at least one hydrophilic monomer and at least one hydrophobic monomer,
   or dissolving a mixture of at least one random radical copolymer as defined before comprising as polymerized units at least one hydrophilic monomer and at least one hydrophobic monomer and at least one the crop protection agent in at least one organic solvent and mixing the solution obtained with an aqueous system;
   or dissolving a mixture of one part of at least one random radical copolymer as defined before comprising as polymerized units at least one hydrophilic monomer and at least one hydrophobic monomer and the at least one crop protection agent in at least one organic solvent and mixing the solution obtained with water and an aqueous solution of a second part of said at least one random radical copolymer,
   wherein optionally further additives may be added to the organic solution and/or the aqueous solution and the mixing is performed by high energy agitation, whereby the crop protection formulation is obtained in form of a dispersion; and
b) removing the water and the organic solvent(s) e.g. by spray drying, vacuum drying, lyophilization or in a fluidized bed dryer.

In the context of the present invention miscible with water has the following meaning. The organic solvents are at least to 10 % by weight miscible with water, preferably at least to 15 % by weight, more preferably at least to 20 % by weight.

The aqueous dispersion formulations which are another subject of the present invention are preferably obtained by dispersing the solid crop protection formulation in an aqueous system.

The novel solid crop protection formulations and the dispersion formulations are especially useful in agriculture for the control of undesired plant growth.

### Detailed description of the invention

While solid crop protection formulations and dispersion formulations of crop protection agents which are not soluble in an aqueous enviroment or only poorly water-soluble have been made previously, this work has several novel and unique features. First, the formulations use copolymers of novel composition from a family of random radical copolymers. Second, the dispersion formulations (nanodispersions) formed by redispersing said solid crop protection formulations in an aqueous medium offer very small average particle sizes giving rise to improved stability and high activities.

Properties of the at least one crop protection agent selected from the group consisting of herbicides, pesticides and fungicides, with the proviso that cinidon-ethyl is not included, which are improved by the novel formulations are for example:
- The rate of dissolution and the solubility of the crop protection agent in aqueous systems;
- The reduction of the amounts of the crop protection agent for its application in agriculture for good results;
- A prolonged persistency of the dispersed crop protection agent.

### General aspects

The following terms which are used in the specification of the present invention have the following general meaning:

### Crop protection agent

In the context of the present invention the solid crop protection agent is the active ingredient, which in general is poorly soluble in an aqueous system. The crop protection agent is selected from the group consisting of herbicides, pesticides and fungicides, with the proviso that cinidon-ethyl is not included. The pesticides are preferably selected from the group consisting of acaricides, insecticides and nematicides. In the crop protection formulations of the present invention at least one crop protection agent is employed. The number of crop protection agents used in the crop protection formulations of the present invention depends on the application of the crop protection formulations.

Preferred herbicides, acaricides, insecticides, nematicides, and fungicides are disclosed in http://www.hclrss.demon.co.uk/index_cn_frame.html (Index of common names). A list of preferred herbicides, acaricides, insecticides, nematicides, and fungicides is given below, wherein some of the active ingredients are listed more then one time with different common names:

Abamectin; acephate; acequinocyl; acetamiprid; acethion; acetochlor; acetoprole; acifluorfen; aclonifen; ACN; acrinathrin; acrolein; acrylonitrile; acypetacs; alachlor; alanap; alanycarb aldicarb; aldimorph; aldoxycarb; aldrin; allethrin; d-trans-allethrin; allidochlor; allosamidin; alloxydim; allyl alcohol; allyxycarb; alorac; alpha-cypermethrin; ametridione; ametryn; ametryne; amibuzin; amicarbazone; amidithion; amidoflumet; amidosulfuron; aminocarb; aminotriazole; amiprofos-methyl; amiton; amitraz; amitrole; ammonium sulfamate; ampropylfos; AMS; anabasine; anilazine; anilofos; anisuron; arprocarb; arsenous oxide; asulam; athidathion; atraton; atrazine; aureofungin; avermectin B1; azaconazole; azadirachtin; azafenidin; azamethiphos; azidithion; azimsulfuron; azinphos-ethyl (= azinphosethyl); azinphos-methyl (= azinphosmethyl); aziprotryn (= aziprotryne); azithiram; azobenzene; azocyclotin; azothoate; azoxystrobin; barban (= barbanate); barium hexafluorosilicate; barium polysulfide; barium silicofluoride; barthrin; BCPC; beflubutamid; benalaxyl; benazolin; bendiocarb; bendioxide; benefin (= benfluralin); benfuracarb; benfuresate; benodanil; benomyl; benoxafos; benquinox; bensulfuron; bensulide; bensultap; bentaluron; bentazon (= bentazone); benthiocarb; benzadox; benzalkonium chloride; benzamacril; benzamizole; benzamorf; benzene hexachloride; benzfendizone; benzipram; benzobicyclon; benzoepin; benzofenap; benzofluor; benzohydroxamic acid; benzomate benzoximate (= benzoylprop); benzthiazuron; benzyl benzoate; beta-cyfluthrin; beta-cypermethrin; bethoxazin; BHC; gamma-BHC; bialaphos; bifenazate; bifenox; bifenthrin; bilanafos; binapacryl; bioallethrin; bioethanomethrin; biopermethrin; bioresmethrin; biphenyl; bispyribac; bistrifluron; bitertanol; bithionol; blasticidin-S; borax; Bordeaux mixture; BPPS; bromacil; bromchlophos; bromfenvinfos; bromobonil; bromobutide; bromocyclen; bromo-DDT; bromofenoxim; bromomethane; bromophos; bromophos-ethyl; bromopropylate; bromoxynil; brompyrazon; bromuconazole; BRP; bufencarb; bupirimate; buprofezin; Burgundy mixture; butacarb; butachlor; butafenacil; butam; butamifos; butathiofos; butenachlor; buthidazole; buthiobate; buthiuron; butocarboxim; butonate; butoxycarboxim; butralin; butroxydim; buturon; butylamine; butylate; butylchlorophos; cacodylic acid; cadusafos; cafenstrole; calcium arsenate; calcium chlorate; calcium cyanamide; calcium polysulfide; cambendichlor; camphechlor; captafol; captan; carbam; carbamorph; carbanolate; carbaryl; carbasulam; carbathion; carbendazim; carbetamide; carbofuran; carbon disulfide; carbon tetrachloride; carbophenothion; carbophos; carbosulfan; carboxazole; carboxin; carfentrazone; carpropamid; cartap; carvone; CDAA; CDEA; CDEC; CEPC; cerenox; cevadilla; Cheshunt mixture; chinalphos; chinalphos-méthyl; chinomethionat; chlobenthiazone; chlomethoxyfen; chlor-IPC; chloramben; chloraniformethan; chloranil; chloranocryl; chlorazifop; chlorazine; chlorbenside; chlorbicyclen; chlorbromuron; chlorbufam; chlordane; chlordecone; chlordimeform; chlorethoxyfos; chloreturon; chlorfenac; chlorfenapyr; chlorfenazole; chlorfenethol; chlorfenidim; chlorfenizon; chlorfenprop; chlorfenson; chlorfensulphide; chlorfenvinphos; chlorfenvinphos-methyl; chlorfluazuron; chlorflurazole; chlorflurecol; chlorflurenol; chloridazon; chlorimuron; chlorinate; chlormephos; chlormethoxynil; chlornitrofen; chloroacetic acid; chlorobenzilate; chloroform; chloromebuform; chloromethiuron; chloroneb; chlorophos; chloropicrin; chloropon; chloropropylate; chlorothalonil; chlorotoluron; chloroxifenidim (= chloroxuron); chloroxynil; chlorphoxim; chlorprazophos; chlorprocarb; chlorpropham; chlorpyrifos; chlorpyrifos-methyl; chlorquinox; chlorsulfuron; chlorthal; chlorthiamid; chlorthiophos; chlortoluron; chlozolinate; chromafenozide; cinerin I; cinerin II; cinmethylin; cinosulfuron; cisanilide; cismethrin; clethodim; climbazole; cliodinate; clodinafop; cloethocarb; clofentezine; clofop; clomazone; clomeprop; cloprop; cloproxydim; clopyralid; cloransulam; closantel; clothianidin; clotrimazole; CMA; CMMP; CMP; CMU; copper acetate; copper acetoarsenite; copper arsenate; copper carbonate, basic; copper hydroxide; copper naphthenate; copper oleate; copper oxychloride; copper 8-quinolinolate; copper silicate; copper sulfate; copper sulfate, basic; copper zinc chromate; coumaphos; coumithoate; 4-CPA; 4-CPB; CPMF; 4-CPP; CPPC; cresol (= cresylic acid); crotamiton; crotoxyfos (= crotoxyphos); crufomate; cryolite; cufraneb; cumyluron; cuprobam; cuprous oxide; CVMP; cyanatryn; cyanazine; cyanofenphos; cyanophos; cyanthoate; cyazofamid; cyclafuramid; cyclethrin; cycloate; cycloheximide; cycloprothrin; cyclosulfamuron; cycloxydim; cyflufenamid; cycluron; cyfluthrin; beta-cyfluthrin; cyhalofop; cyhalothrin; gamma-cyhalothrin; lambda-cyhalothrin; cyhexatin; cymoxanil; cypendazole; cypermethrin; alpha-cypermethrin; beta-cypermethrin; theta-cypermethrin; zeta-cypermethrin; cyperquat; cyphenothrin; cyprazine; cyprazole; cyprex; cyproconazole; cyprodinil; cyprofuram; cypromid; cyromazine; cythioate; 2,4-D; 3,4-DA; daimuron; dalapon; dazomet; 2,4-DB; 3,4-DB; DBCP; DCB; DCIP; DCPA (USA); DCPA (Japan); DCU; DDD; DDPP; DDT; DDVP; 2,4-DEB; debacarb; decafentin; decarbofuran; dehydroacetic acid; deiquat; delachlor; delnav; deltamethrin; demephion; demephion-O; demephion-S; demeton; demeton-methyl; demeton-O; demeton-O-methyl; demeton-S; demeton-S-methyl; demeton-S-methylsulphon (= demeton-S-methyl sulphone); DEP; 2,4-DEP; depalléthrine; derris; 2,4-DES; desmedipham; desmetryn (= desmetryne); diafenthiuron; dialifor (= dialifos); di-allate (= diallate); diamidafos; dianat; diazinon; dibrom; 1,2-dibromoethane; dicamba; dicapthon; dichlobenil; dichlofenthion; dichlofluanid; dichlone; dichloralurea; dichlorfenidim; dichlormate; o-dichlorobenzene (= ortho-dichlorobenzene); p-dichlorobenzene (= para-dichlorobenzene); 1,2-dichloroethane; dichloromethane; dichlorophen; 1,2-dichloropropane; 1,3-dichloropropene; dichlorprop; dichlorprop-P; dichlorvos; dichlozoline; diclobutrazol; diclocymet; diclofop; diclomezine; dicloran; diclosulam; dicofol; dicresyl; dicrotophos; dicryl; dicyclanil; dieldrin; dienochlor; diethamquat; diethatyl; diethion (= diéthion); diethofencarb; diethyl pyrocarbonate; difenoconazole; difenopenten; difenoxuron; difenzoquat; diflubenzuron; diflufenican (= diflufenicanil); diflufenzopyr; diflumetorim; dilor; dimefox; dimefuron; dimehypo; dimepiperate; dimetan; dimethachlor; dimethametryn; dimethenamid; dimethenamid-P; dimethirimol; dimethoate; dimethomorph; dimethrin; dimethylvinphos; dimetilan; dimexano; dimidazon; dimoxystrobin; dimpylate; dinex; diniconazole; diniconazole-M; dinitramine; dinobuton; dinocap; dinocap-4; dinocap-6; dinocton; dinofenate; dinopenton; dinoprop; dinosam; dinoseb; dinosulfon; dinotefuran; dinoterb; dinoterbon; diofenolan; dioxabenzofos; dioxacarb; dioxathion; diphenamid; diphenyl sulfone; diphenylamine; diphenylsulphide; dipropetryn; dipterex; dipyrithione; diquat; disugran; disul; disulfiram; disulfoton; ditalimfos; dithianon; dithicrofos; dithiométon; dithiopyr; diuron; dixanthogen; DMPA; DNOC; dodemorph; dodicin; dodine; dofenapyn; doguadine; doramectin (= 2,4-DP); 3,4-DP; DPC; drazoxolon; DSMA; d-trans-allethrin; dymron; EBEP; ecdysone (=ecdysterone); echlomezol; EDB; EDC; EDDP (= edifenphos); eglinazine; emamectin; EMPC; empenthrin; endosulfan; endothal (= endothall); endothion; endrin; ephirsulfonate; EPN; epofenonane; epoxiconazole; eprinomectin; epronaz; EPTC; erbon; esfenvalerate; ESP; esprocarb; etaconazole; etaphos; etem; ethaboxam; ethalfluralin; ethametsulfuron; ethidimuron; ethiofencarb; ethiolate; ethion; ethiprole; ethirimol; ethoate-methyl; ethofumesate; ethoprop (= ethoprophos); ethoxyfen; ethoxyquin; ethoxysulfuron; ethyl pyrophosphate; ethylan (= ethyl-DDD); ethylene dibromide; ethylene dichloride; ethylene oxide; ethyl formate; ethylmercury acetate; ethylmercury bromide; ethylmercury chloride; ethylmercury phosphate; etinofen; ETM; etnipromid; etobenzanid; etofenprox; etoxazole; etridiazole; etrimfos; EXD; famoxadone; famphur; fenac; fenamidone; fenaminosulf; fenamiphos; fenapanil; fenarimol; fenasulam; fenazaflor; fenazaquin; fenbuconazole; fenbutatin oxide; fenchlorphos; fenethacarb; fenfluthrin; fenfuram; fenhexamid; fenidin; fenitropan; fenitrothion; fénizon; fenobucarb; fenolovo; fenoprop; fenothiocarb; fenoxacrim; fenoxanil; fenoxaprop; fenoxaprop-P; fenoxycarb; fenpiclonil; fenpirithrin; fenpropathrin; fenpropidin; fenpropimorph; fenpyroximate; fenridazon; fenson; fensulfothion; fenteracol; fenthiaprop; fenthion; fenthion-ethyl; fentiaprop; fentin; fentrazamide; fentrifanil; fenuron; fenvalerate; ferbam; ferimzone; ferrous sulfate; fipronil; flamprop; flamprop-M; flazasulfuron; flonicamid; florasulam; fluacrypyrim; fluazifop; fluazifop-P; fluazinam; fluazolate; fluazuron; flubenzimine; flucarbazone; fluchloralin; flucofuron; flucycloxuron; flucythrinate; fludioxonil; fluenetil; flufenacet; flufenerim; flufenican; flufenoxuron; flufenprox; flufenpyr; flumethrin; flumetover; flumetsulam; flumezin; flunuclorac; flumioxazin; flumipropyn; fluometuron; fluorbenside; fluoridamid; fluorochloridone; fluorodifen; fluoroglycofen; fluoroimide; fluoromidine; fluoronitrofen; fluothiuron; fluotrimazole; flupoxam; flupropacil; flupropanate; flupyrsulfuron; fluquinconazole; fluridone; flurochloridone; fluromidine; fluroxypyr; flurtamone; flusilazole; flusulfamide; fluthiacet; flutolanil; flutriafol; fluvalinate; tau-fluvalinate; folpel (= folpet); fomesafen; fonofos; foramsulfuron; formaldehyde; formetanate; formothion; formparanate; fosamine; fosetyl; fosmethilan; fospirate; fosthiazate; fosthietan; fthalide; fuberidazole; furalaxyl; furametpyr; furathiocarb; furcarbanil; furconazole; furconazolecis; furethrin; furmecyclox; furophanate; furyloxyfen; gamma-BHC; gamma-cyhalothrin; gamma-HCH; glufosinate; glyodin; glyphosate; griseofulvin; guanoctine (= guazatine); halacrinate; halfenprox; halofenozide; halosafen; halosulfuron; haloxydine; haloxyfop; HCA; HCH; gamma-HCH; HEOD; heptachlor; heptenophos; heterophos; hexachlor (= hexachloran); hexachloroacetone; hexachlorobenzene; hexachlorobutadiene; hexaconazole; hexaflumuron; hexafluoramin; hexaflurate; hexazinone; hexylthiofos; hexythiazox; HHDN; hydramethylnon; hydrogen; cyanide; hydroprene; hydroxyisoxazole; 8-hydroxyquinoline; sulfate; hymexazol; hyquincarb; IBP; imazalil; imazamethabenz; imazamox; imazapic; imazapyr; imazaquin; imazethapyr; imazosulfuron; imibenconazole; imidacloprid; iminoctadine; imiprothrin; indanofan; indoxacarb; iodobonil; iodofenphos; iodosulfuron; ioxynil; ipazine; IPC; ipconazole; iprobenfos; iprodione; iprovalicarb; iprymidam; IPSP; IPX; isamidofos; isazofos; isobenzan; isocarbamid; isocil; isodrin; isofenphos; isomethiozin; isonoruron; isopolinate; isoprocarb; isoprocil; isopropalin; isoprothiolane; isoproturon; isothioate; isouron; isovaledione; isoxaben; isoxachlortole; isoxaflutole; isoxapyrifop; isoxathion; isuron; ivermectin; jasmolin I; jasmolin II; jodfenphos; juvenile; hormone I; juvenile; hormone II; juvenile; hormone III; karbutilate; kasugamycin; kelevan; kinoprene; kresoxim-methyl; lactofen; lambda-cyhalothrin; lead arsenate; lenacil; leptophos; lime sulfur; d-limonene; lindane; linuron; lirimfos; lufenuron; lythidathion; M-74; M-81; MAA; malathion; maldison; malonoben; MAMA; mancopper; mancozeb; maneb; mazidox; MCC; MCPA; MCPA-thioethyl; MCPB; 2,4-MCPB; mebenil; mecarbam; mecarbinzid; mecarphon; mecoprop; mecoprop-P; medinoterb; mefenacet; mefluidide; menazon; MEP; mepanipyrim; mephosfolan; mepronil; mercaptodimethur; mercaptophos; mercaptophos-teolovy; mercaptothion; mercuric; chloride; mercuric oxide; mercurous; chloride; mesoprazine; mesosulfuron; mesotrione; mesulfen; mesulfenfos; mesulphen; metalaxyl; metalaxyl-M; metam; metamitron; metaphos; metaxon; metazachlor; metazoxolon; metconazole; metflurazon; methabenzthiazuron; methacrifos; methalpropalin; metham; methamidophos; methasulfocarb; methazole; methfuroxam; methibenzuron; methidathion; methiobencarb; methiocarb; methiuron; methocrotophos; métholcarb; methometon; methomyl; methoprene; methoprotryn; methoprotryne; methoxychlor; 2-methoxyethylmercury; chloride; methoxyfenozide; methyl bromide; methylchloroform; methyldithiocarbamic; acid; methyldymron; methylene; chloride; methyl; isothiocyanate; methyl-mercaptophos; methylmercaptophos; oxide; methyl-mercaptophos-teolovy; methylmercury; benzoate; methylmercury; dicyandiamide; methyl parathion; methyltriazothion; metiram; metobenzuron; metobromuron; metolachlor; S-metolachlor; metolcarb; metominostrobin; metosulam; metoxadiazone; metoxuron; metrafenone; metribuzin; metriphonate; metsulfovax; metsulfuron; mevinphos; mexacarbate; milbemectin; milneb; mipafox; MIPC; mirex; MNAF; molinate; monalide; monisouron; monochloroacetic; acid; monocrotophos; monolinuron; monosulfiram; monuron; morfamquat; morphothion; MPMC; MSMA; MTMC; myclobutanil; myclozolin; nabam; naftalofos; naled; naphthalene; naphthalic; anhydride; naphthalophos; naproanilide; napropamide; naptalam; natamycin; neburea; neburon; nendrin; nichlorfos; niclofen; niclosamide; nicobifen; nicosulfuron; nicotine; nifluridide; nikkomycins; NIP; nipyraclofen; nitenpyram; nithiazine; nitralin; nitrapyrin; nitrilacarb; nitrofen; nitrofluorfen; nitrostyrene; nitrothalisopropyl; nobormide; norbormide; norea; norflurazon; noruron; novaluron; noviflumuron; NPA; nuarimol; OCH; octhilinone; o-dichlorobenzene; ofurace; omethoate; orbencarb; orthobencarb; ortho-dichlorobenzene; oryzalin; ovatron; ovex; oxadiargyl; oxadiazon; oxadixyl; oxamyl; oxapyrazon; oxasulfuron; oxaziclomefone; oxine-copper; oxine-Cu; oxpoconazole; oxycarboxin; oxydemeton-methyl; oxydeprofos; oxydisulfoton; oxyfluorfen; oxythioquinox; PAC; palléthrine; PAP; para-dichlorobenzene; parafluron; paraquat; parathion; parathion-methyl; Paris green; PCNB; PCP; p-dichlorobenzene; pebulate; pedinex; pefurazoate; penconazole; pencycuron; pendimethalin; penfluron; penoxsulam; pentachlorophenol; pentanochlor; pentoxazone; perfluidone; permethrin; pethoxamid; PHC; phénétacarbe; phenisopham; phenkapton; phenmedipham; phenmediphana-ethyl; phenobenzuron; phenothiol; phenothrin; phenthoate; phenylmercuriurea; phenylmercury acetate; phenylmercury chloride; phenylmercury nitrate; phenylmercury salicylate; 2-phenylphenol; phorate; phosalone; phosdiphen; phosfolan; phosmet; phosnichlor; phosphamide; phosphamidon; phosphine; phosphocarb; phoxim; phoxim-methyl; phthalide; phthalophos; phthalthrin; picloram; picolinafen; picoxystrobin; piperophos; pirimetaphos; pirimicarb; pirimiphos-ethyl; pirimiphos-methyl; PMA; PMP; polycarbamate; polychlorcamphene; polyethoxyquinoline; polyoxins; polyoxorim; potassium arsenite; potassium cyanate; potassium polysulfide; potassium thiocyanate; prallethri.n; precocene I; precocene II; precocene III; pretilachlor; primidophos; primisulfuron; probenazole; prochloraz; proclonol; procyazine; procymidone; prodiamine; profenofos; profluazol; profluralin; profoxydim; proglinazine; promacyl; promecarb; prometon; prometryn; prometryne; pronamide; propachlor; propafos; propamocarb; propanil; propaphos; propaquizafop; propargite; propazine; propetamphos; propham; propiconazole; propineb; propisochlor, propoxur; propoxycarbazone; propyzamide; prosulfalin; prosulfocarb; prosulfuron; prothidathion; prothiocarb; prothiofos; prothoate; protrifenbute; proxan; prymidophos; prynachlor; pydanon; pyracarbolid; pyraclofos; pyraclonil; pyraclostrobin; pyraflufen; pyrazolate; pyrazolynate; pyrazon; pyrazophos; pyrazosulfuron; pyrazoxyfen; pyresmethrin; pyrethrin I; pyrethrin II; pyrethrins; pyribenzoxim; pyributicarb; pyriclor; pyridaben; pyridafol; pyridaphenthion; pyridate; pyridinitril; pyrifenox; pyriftalid; pyrimetaphos; pyrimethanil; pyrimicarbe; pyrimidifen; pyrimitate; pyriminobac; pyrimiphos-ethyl; pyrimiphos-méthyl; pyriproxyfen; pyrithiobac; pyroquilon; pyroxychlor; pyroxyfur; quassia; quinacetol; quinalphos; quinalphos-methyl; quinazamid; quinclorac; quinconazole; quinmerac; quinoclamine; quinomethionate; quinonamid; quinothion; quinoxyfen; quintiofos; quintozene; quizalofop; quizalofop-P; rabenzazole; rafoxanide; reglone; resmethrin; rhodethanil; rimsulfuron; rodéthanil; ronnel; rotenone; ryania; sabadilla; salicylanilide; schradan; sebuthylazine; secbumeton; selamectin; sesone; sethoxydim; sevin; siduron; silafluofen; silthiofam; silvex; simazine; simeconazole; simeton; simetryn; simetryne; SMA; sodium arsenite; sodium chlorate; sodium fluoride; sodium hexafluorosilicate; sodium orthophenylphenoxide; sodium pentachlorophenate; sodium pentachlorophenoxide; sodium o-phenylphenoxide; sodium polysulfide; sodium silicofluoride; disodium tetraborate; sodium thiocyanate; solan; sophamide; spinosad; spirodiclofen; spiroxamine; stirofos; streptomycin; sulcofuron; sulcotrione; sulfallate; sulfentrazone; sulfiram; sulfluramid; sulfometuron; sulfosulfuron; sulfotep; sulfotepp; sulfur; sulfuric acid; sulfuryl fluoride; sulglycapin; sulprofos; sultropen; swep; 2,4,5-T; tau-fluvalinate; tazimcarb; 2,4,5-TB; 2,3,6-TBA; TBTO; TBZ; TCA; TCBA; TCMTB; TCNB; TDE; tebuconazole; tebufenozide; tebufenpyrad; tebupirimfos; tebutam; tebuthiuron; tecloftalam; tecnazene; tecoram; tedion; teflubenzuron; tefluthrin; temephos; TEPP; tepraloxydim; terallethrin; terbacil; terbucarb; terbuchlor; terbufos; terbumeton; terbuthylazine; terbutol; terbutryn; terbutryne; terraclor; tetrachloroethane; tetrachlorvinphos; tetraconazole; tetradifon; tetradisul; tetrafluron; tetramethrin; tetranactin; tetrasul; thenylchlor; theta-cypermethrin; thiabendazole; thiacloprid; thiadiazine; thiadifluor; thiamethoxam; thiameturon; thiazafluron; thiazone; thiazopyr; thicrofos; thicyofen; thidiazimin; thidiazuron; thifensulfuron; thifluzamide; thiobencarb; thiocarboxime; thiochlorfenphim; thiochlorphenphime; thiocyclam; thiodan; thiodicarb; thiofanocarb; thiofanox; thiomersal; thiometon; thionazin; thiophanate; thiophanate-ethyl; thiophanate-methyl; thiophos; thioquinox; thiosultap; thiram; thiuram; thuringiensin; tiabendazole; tiocarbazil; tioclorim; tioxymid; TMTD; tolclofos-methyl; tolylfluanid; tolfenpyrad; tolylmercury acetate; toxaphene; 2,4,5-TP; 2,3,3-TPA; TPN; tralkoxydim; tralomethrin; d-trans-allethrin; transfluthrin; transpermethrin; tri-allate; triadimefon; triadimenol; triallate; triamiphos; triarathene; triarimol; triasulfuron; triazamate; triazbutil; triaziflam; triazophos; triazothion; triazoxide; tribenuron; tributyltin oxide; tricamba; trichlamide; trichlorfon; trichlormetaphos-3; trichloronat; trichloronate; trichlorphon; triclopyr; tricyclazole; tricyclohexyltin; hydroxide; tridemorph; tridiphane; trietazine; trifenofos; trifloxystrobin; trifloxysulfuron; triflumizole; triflumuron; trifluralin; triflusulfuron; trifop; trifopsime; triforine; trimeturon; triphenyltin; triprene; tripropindan; tritac; triticonazole; tritosulfuron; uniconazole; uniconazole-P; validamycin; vamidothion; vaniliprole; vernolate; vinclozolin; XMC; xylachlor; xylenols; xylylcarb; zarilamid; zetacypermethrin; zinc naphthenate; zineb; zolaprofos; zoxamide trichlorophenate; 1,2-dichloropropane; 1,3-dichloropropene; 2-methoxyethylmercury chloride; 2-phenylphenol; 2,3,3-TPA; 2,3,6-TBA; 2,4-D; 2,4-DB; 2,4-DEB; 2,4-DEP; 2,4-DP; 2,4-MCPB; 2,4,5-T; 2,4,5-TB; 2,4,5-TP; 3,4-DA; 3,4-DB; 3,4-DP; 4-CPA; 4-CPB; 4-CPP; 8-hydroxyquinoline sulfate.

### Aqueous system

The aqueous system is the application media wherein the at least one crop protection agent is formulated and employed in form of a nanoparticular system. The aqueous system may be pure water or water comprising a buffer system, further salts and or further conventional additives. The pH-value of the aqueous system is generally in the range of 2 to 13, preferably 3 to 12, more preferably 4 to 11.

### Random radical copolymers (nanodispersants) and preparation process

### Random radical copolymers

The random radical copolymers of the present invention act as nanodispersants. In the context of the present invention nanodispersants are compounds which are compatible with both, **the crop protection agent**, and the application media, which is an aqueous system.

The random radical copolymers employed in the present invention are essentially consisting of
a) 30 to 60 % by weight of styrene as component A;
b) 30 to 60 % by weight of DMAPMAM (dimethylaminopropyl methacrylic amide) as component B;
c) 0 to 60 % by weight, more preferably 0 to 30 % by weight of methyl acrylate and/or vinyl acetate as component C.

### Preparation of the random radical copolymers

The preparation of said random radical copolymers is preferably carried out in a conventional manner by free radical polymerization, in solution, in mass, in emulsion or in suspension.

The initiator used in the synthesis of said random radical copolymers is a substance capable of forming radicals. Preferably the initiator is selected from the group consisting of azocompounds, for example AIBN (azobisisobutyronitrile), peroxides, for example K₂S₂O₈ and Na₂S₂O₈. Preferably, AIBN is used.

Said initiators are employed in amounts known in the art, for example in amounts of 0.2 to 20 % by weight, preferably 1.0 to 10 % by weight, relating to the amount of monomers employed.

Suitable solvents are selected from the group consisting of aliphatic carboxylic acids with 1 to 3 carbon atoms, their amides, their mono-C₁-C₄-alkyl amides and di-C₁-C₄ alkyl amides, aliphatic and aromatic chlorohydrocarbons, alcohols of 1 to 5 carbon atoms, for example isopropanol, ketones of 3 to 6 carbon atoms, for example acetone, aromatic hydrocarbons, N-alkylated lactams and mixtures of these. Because of their good solvent power, preferred solvents are methanol, ethanol, isopropanol, formic acid, formamide, dimethylformamide; dimethylpropionamide, N-methylpyrrolidone, methylene chloride, chloroform, 1,2-dichloroethane, chlorobenzene, toluene, xylene, acetone, methylethylketone, methylisopropylketone, methylisobutylketone and mixtures of these.

The composition and conversion in the copolymer synthesis is preferably checked by using standard methods such as NMR (nuclear magnetic resonance) and GPC (gel permeation chromatography).

### Nanoparticular dispersion formulations

Said random radical copolymers are useful dispersing agents to disperse at least one crop protection agent selected from the group consisting of herbicides, pesticides and fungicides, with the proviso that cinidon-ethyl is not included, in form of stable nanoparticular dispersion formulations. Such nanoparticular dispersion formulations are systems comprising at least one continuous phase (dispersion media), which is an aqueous system in the present invention, and at least one dispersed phase. Said dispersed phase (further on called dispersed particles) is in the context of the present invention a solid phase. The dispersion formulations may optionally contain further additives. Suitable examples for said further additives are mentioned below.

### Solid crop protection formulation and preparation process

### Solid crop protection formulation

The solid crop protection formulation of the present invention is especially useful for application in an aqueous media, whereby dispersion formulations with a high activity of the at least one crop protection agent are obtained.

Therefore, one embodiment of the present invention is a solid crop protection formulation comprising
a) at least one crop protection agent selected from the group consisting of herbicides, pesticides and fungicides, with the proviso that cinidon-ethyl is not included; and
b) at least one random radical copolymer essentially consisting of
   a) 30 to 60 % by weight of styrene as component A;
   b) 30 to 60 % by weight of DMAPMAM (dimethylaminopropyl methacrylic amide) as component B;
   c) 0 to 60 % by weight of methyl acrylate and/or vinyl acetate as component C, and
c) optionally further additives,
wherein at least 50 % by weight, preferably 70 % by weight and more preferably 90 % by weight of the dispersed particles of the at least one crop protection agent in said solid crop protection formulation are in an X-ray amorphous state. In the context of the present invention X-ray amorphus means the absence of crystal interferences in X-ray powder diagrams.

Random radical copolymers which are preferably employed in the solid crop protection formulations of the present invention are mentioned above.

Furher additives which may optionally be employed in said solid crop protection formulations are mentioned below.

### Preparation of solid crop protection formulations containing at least one crop protection agent selected from the group consisting of herbicides, pesticides and fungicides, with the proviso that cinidon-ethyl is not included

The solid crop protection formulations may be formed by two different routes:
1. "solid solution route"
2. "precipitation route"

### 1. "solid solution route"

In one embodiment of the present invention said solid crop protection formulations are formed by a process comprising the steps of
a) mixing a solution of at least one random radical copolymer as mentioned above in at least one first organic solvent and a solution of at least one crop protection agent selected from the group consisting of herbicides, pesticides and fungicides, with the proviso that cinidon-ethyl is not included, in at least one second organic solvent which may be the same as or different from said first organic solvent; or dissolving a mixture of at least one random radical copolymer as mentioned above and the at least one crop protection agent in at least one organic solvent, wherein optionally further additives (as mentioned above) may be added to the organic solvent(s); and
b) removing the organic solvent(s) e.g. by spray drying, vacuum drying, lyophilization or in a fluidized bed dryer.

In a first step a) of the process an organic solution which comprises at least one of said novel copolymers and the at least one crop protection agent and optionally further additives in at least one organic solvent is prepared. Said organic solution may be prepared directly by mixing the solutions of one of said novel copolymers and the at least one crop protection agent containing optionally further additives or by dissolving a mixture of said random radical copolymer and the at least one crop protection agent and optionally further additives in at least one organic solvent.

The total solids content of said organic solution, containing both, said random radical copolymer and the at least one crop protection agent, and optionally further additives amounts to 0.5 to 40% by weight, preferably 1 to 20% by weight.

The organic solution of the novel random radical copolymer may be obtained in a conventional manner, if necessary by heating the components in an organic solvent at up to about 150°C. If said random radical copolymers are obtained by solution polymerization, these polymers can be employed in the form of the solution obtained from their preparation.

Suitable organic solvents are preferably selected from the group consisting of alcohols, preferably alcohols of 1 to 5 carbon atoms, for example methanol, ethanol, n-propanol, isopropanol; esters, ketones, preferably ketones of 3 to 6 carbon atoms, for example acetone, methylethylketone, methylisopropylketone, methylisobutylketone; acetales; ethers; preferably cyclic ethers, for example tetrahydrofurane; aliphatic carboxylic acids with 1 to 3 carbon atoms, for example formic acid, their amides, for example formamide, their mono-C₁-C₄-alkylamides, di-C₁-C₄ alkyl amides, for example dimethyl formamide and dimethylpropionamide; aliphatic and aromatic chlorohydrocarbons, for example methylene chloride, chloroform, 1,2-dichloroethane and chlorobenzene; N-alkylated lactams; and mixtures of these.

Because of their good solvent power, preferred solvents are methanol, ethanol, isopropanol, formic acid, formamide, dimethylformamide, dimethylpropionamide, N-methylpyrrolidone, methylene chloride, chloroform, 1,2-dichloroethane, chlorobenzene, acetone, methylethylketone, methylisopropylketone, methylisobutylketone and mixtures of these. The most preferred solvents are methanol, ethanol, n-propanol, isopropanol, acetone, tetrahydrofurane and dimethylformamide.

In a second step b) the organic solvent(s) is/are removed e.g. by spray drying, preferably at a temperature at the spray head of 60 to 180°C, more preferably of 70 to 150°C, vacuum drying, lyophilization or in a fluidized bed dryer to obtain the solid crop protection formulations.

### 2. "precipitation route"

In another embodiment of the present invention said solid crop protection formulations are formed by a process comprising the step of
mixing a solution of at least one crop protection agent selected from the group consisting of herbicides, pesticides and fungicides, with the proviso that cinidon-ethyl is not included, in at least one organic solvent which is miscible with water and an aqueous solution of at least one random radical copolymer as mentioned above,
or dissolving a mixture of at least one random radical copolymer comprising as polymerized units at least one hydrophilic monomer and at least one hydrophobic monomer and the at least one crop protection agent in at least one organic solvent and mixing the solution obtained with an aqueous system;
or dissolving a mixture of one part of at least one random radical copolymer comprising as polymerized units at least one hydrophilic monomer and at least one hydrophobic monomer and the at least one crop protection agent in at least one organic solvent and mixing the solution obtained with water and an aqueous solution of a second part of said at least one random radical copolymer,
wherein optionally further additives (as mentioned above) may be added to the organic solution and/or the aqueous solution and the mixing is performed by high energy agitation.

This ends up in a formation of a dispersion of the crop protection formulations, comprising particles of at least one crop protection agent selected from the group consisting of herbicides, pesticides and fungicides, with the proviso that cinidon-ethyl is not included, and at least one copolymer as mentioned above, and optionally further additives.

In the context of the present invention micible with water has the following meaning. The organic solvents are at least to 10 % by weight miscible with water, preferably at least to 15 % by weight, more preferably at least to 20 % by weight.

In a first step a solution of at least one crop protection agent selected from the group consisting of herbicides, pesticides and fungicides, with the proviso that cinidon-ethyl is not included, in a suitable organic solvent is prepared. Suitable organic solvents are solvents which are miscible with water. Said solvents are thermally stable and consist of carbon, hydrogen, oxygen and/or nitrogen. Solvents containing less than 10 carbon atoms and/or having a boiling point below 200°C are preferred. More preferably said solvents are selected from the group consisting of alcohols, esters, ketones, ethers, di-C₁-C₄ alkyl amides and acetales containing less than 10 carbon atoms and/or having a boiling point below 200°C. Most preferred are ethanol, n-propanol, isopropanol, 2-butandiol-1-methyl ether, 1,2-propanediol-1-n-propyl ether, acetone, dimethyl formamide and tetrahydrofurane.

In one preferred embodiment of the present process the solution of the at least one crop protection agent in a suitable organic solvent is obtained at a temperature of 20 to 150°C in less than 120 s, optionally at a pressure of up to 100 bar, preferably at a pressure of 30 bar.

The obtained solution of the at least one crop protection agent preferably comprises 10 to 500g of the at least one crop protection agent in 1000g of the solvent used.

In a second step said solution of the at least one crop protection agent is mixed with an aqueous solution of a random radical copolymer as mentioned above.

It is also possible to add an aqueous solution of the random radical copolymer to the organic solution of the at least one crop protection agent.

The concentration of the copolymer in said aqueous solution is preferably from 0.1 to 200 g/1, more preferably from 1 to 100 g/1. Optionally further additives may be added to the organic solution and/or the aqueous solution.

In another embodiment of the present invention a solution of at least one crop protection agent selected from the group consisting of herbicides, pesticides and fungicides, with the proviso that cinidon-ethyl is not included, and the random radical copolymer and optionally further additives in a suitable organic solvent as mentioned above is prepared in a first step. In a second step said solution is mixed with an aqueous phase which may additionally comprise a part of the random radical copolymer.

To obtain small particle sizes it is useful to mix the organic solution and the aqueous solution by providing high energy agitation, for example by powerful stirring or shaking in a suitable device. It is also possible to inject one jet of each solution (the organic solution and the aqueous solution) in a mixing chamber, wherein a vigorous mixing occurs.

The mixing may be discontinuous or continuous, which is preferred. This ends up in a formation of a dispersion of the crop protection formulation, comprising particles of *at lesat one* crop protection agent selected from the group consisting of herbicides, pesticides and fungicides, with the proviso that cinidon-ethyl is not included, and at least one copolymer as mentioned above, and optionally further additives.

The dispersion of the crop protection formulation is dried for example by spray drying, vacuum drying, lyophilization or in a fluidized bed dryer to obtain the solid crop protection formulations.

### Dispersion formulations and preparation process

The random radical copolymers as mentioned above are especially useful dispersing agents to disperse at least one crop protection agent selected from the group consisting of herbicides, pesticides and fungicides, with the proviso that cinidon-ethyl is not included, in a stable nanoparticular form (nanodispersions) in an aqueous medium. This way aqueous dispersion formulations for use in agriculture as crop protection formulations in an aqueous medium are obtained. Said formulations offer very small average particle sizes giving rise to improved stability and high activities.

Therefore, another embodiment of the present invention is a dispersion formulation comprising
a) at least one crop protection agent selected from the group consisting of herbicides, pesticides and fungicides, with the proviso that cinidon-ethyl is not included; and
b) at least one random radical copolymer essentially consisting of
   a) 30 to 60 % by weight of styrene as component A;
   b) 30 to 60 % by weight of DMAPMAM (dimethylaminopropyl methacrylic amide) as component B;
   c) 0 to 60 % by weight of methyl acrylate and/or vinyl acetate as component C;
c) optionally further additives; and
d) an aqueous system.

Random radical copolymers which are preferably employed in the dispersion formulations of the present invention are mentioned above. Further additives which may be added to the novel dispersion formulations are also mentioned above.

The ratio of said copolymer to the at least one crop protection agent in said dispersion formulations is from 10 : 1 to 1 : 10, preferably from 5 : 1 to 1 : 5.

An important feature to obtain dispersion formulations with improved stability wherein the particles of the at least one crop protection agent do not crystallize, aggregate, flocculate or precipitate out of the aqueous medium, is the average particle size of the crop protection agent in said dispersion formulations. The average particle size, reported in terms of hydrodynamic radius of the dispersed particle in said dispersion formulations is therefore preferably from 10 to 500 nm, more preferably from 10 to 300 nm, most preferably from 10 to 150 nm.

The polydispersity index (PDI value) is preferably from 0.04 to 0.8, more preferably from 0.04 to <0.3.

The average particle sizes and PDI values of particles comprising the crop protection agent and the random radical copolymer were characterized by light scattering methods, preferably fiber optic dynamic light scattering measurements (FODLS). Therefore, samples of said dispersion formulations were diluted to approximately 0.005% solids in an appropriate carrier aqueous solution. Average particle sizes and polydispersity indices (PDI values) were determined by second order cumulant analysis and are reported in terms of hydrodynamic radius (r_{H}).

### Preparation of dispersion formulations

The dispersion formulations are obtained by a process comprising the steps of
a) mixing a solution of at least one crop protection agent selected from the group consisting of herbicides, pesticides and fungicides, with the proviso that cinidon-ethyl is not included, in at least one organic solvent which is miscible with water and an aqueous solution of at least one random radical copolymer mentioned above comprising as polymerized units at least one hydrophilic monomer and at least one hydrophobic monomer, wherein optionally further additives may be added to the organic solution and/or the aqueous solution and the mixing is performed by high energy agitation, whereby the crop protection formulation is obtained in form of a dispersion; and
b) removing the organic solvent(s).

Random radical copolymers which are preferably employed in the dispersion formulations of the present invention are mentioned above. Further additives which may be added to the novel dispersion formulations are also mentioned above.

In a preferred embodiment of the present invention the dispersion formulations of at least one crop protection agent selected from the group consisting of herbicides, pesticides and fungicides, with the proviso that cinidon-ethyl is not included, were formed by dispersing a solid crop protection formulation as described above of said copolymers and the at least one crop protection agent in an aqueous system.

Preferably the aqueous system is added to said solid crop protection formulations and the obtained mixture is preferably agitated to form said dispersion formulations.

### Additives in the crop protection formulations of the present invention

The crop protection formulations of the present invention may comprise further additives. Suitable additives are known in the art.

Suitable inert auxiliaries are essentially: mineral oil fractions of medium to high boiling point, such as kerosene and diesel oil, furthermore coal tar oils and oils of vegetable or animal origin, aliphatic, cyclic and aromatic hydrocarbons, eg. paraffins, tetrahydronaphthalene, alkylated naphthalenes and their derivatives, alkylated benzenes and their dervatives, alcohols such as mehtanol, ehtanol, propanol, butanol and cyclohexanol, ketones such as cyclohexanone, strongly polar solvents, eg. amines such as N-methylpyrrolidone.

Preferred additives are stabilizers and softeners.

Suitable stabilizers may be low molecular weight compounds, for example mono and diglycerides, esters of mono glycerides, such as acetic ester, citric ester, lactic ester, diacetic tartraic acid ester, alkyl glucosides, sorbitan fatty acid ester, propylene glycol fatty acid ester, stearoyl-2-lactylate, lecithin, fatty acid derivatives of urea and urethanes like dioleyl urea and N-oleyloleyl urethane. Especially preferred are ascorbylpalmitate and fatty acid carbonates like dioleyl carbonate.

The crop protection formulations preferably contain 0 to 90 % by weight, more preferably 0 to 50 % by weight of said stabilizers.

Softeners are useful to improve the mechanical properties of the novel solid crop protection formulations.

Preferred softeners are sugars or sugar alcohols, for example saccharose, glucose, lactose, fructose, inverted sugar, sorbide, mannitol or glycerol.

The crop protection formulations preferably contain 0 to 90 % by weight, more preferably 0 to 50 % by weight of said softeners.

Further suitable additives in the aqueous dispersion formulations of the present invention are surfactants.

Suitable surfactants are the alkali metal salts, alkaline earth metal salts and ammoium salts of aromatic sulfonic acids, eg. lignophenol-, naphthalene- and dibutylnaphthalenesulfonic acid, and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene and its derivatives with formaldehyde, condensates of naphthalene, or of the naphthalenesulfonic acids with phenol and formaldehyde, polyoxyethylene octylphenol ether, ethoxylated isooctyl-, octyl- or nonylphenol, alkylphenyl or tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignin-sulfite waste liquors or methylcellulose.

The aqueous crop protection formulations preferably contain 0 to 90 % by weight, more preferably 0 to 50 % and most preferably 0,5 to 10 % by weight of said surfactants.

Powders, materials for scattering and dusts can be prepared by mixing or grinding the solid crop protection formulations together with solid carrier.

Granules, eg. coated granules, impregnated granules and homogeneous granules, can be prepared by binding the solid crop protection formulations to solid carriers. Solid carriers are mineral earths, such as silcas, silica gels, silicates, talc, kaolin, limistone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate and ammonium nitrate, ureas, and products of vegetable origin, such as cereal meal, tree bark meal, wood meal and nutshell meal, cellulose powders, or other solid carriers.

The concentrations of the at least one crop protection agent in the aqueous dispersion formulations can be varied within wide ranges. In general, the formulations comprise approximately from 0.001 to 98% by weight, preferably 0.01 to 95% by weight of at least one crop protection agent selected from the group consisting of herbicides, pesticides and fungicides, with the proviso that cinidon-ethyl is not included. The crop protection agents are employed in a purity of from 90% to 100%, preferably 95% to 100 % (according to the NMR spectrum).

To widen the spectrum of action and to achieve synergistic effects, the novel crop protection formulations may be mixed with a large number of representatives of other herbicidal or growth-regulating active compound groups and then applied concomitantly. Suitable components for mixtures are, for example, 1,2,4-thiadiazoles, 1,3,4- thiadiazoles, amides, aminophosphoric acid and its derivatives, aminotriazoles, anilides, aryloxy/hetaryloxyalkanoic acids and their derivatives, benzoic acid and its derivatives, benzothiadiazinones, 2-(hetaroyl/aroyl)-1,3-cyclohexanediones, hetaryl aryl ketones, benzylisoxazolidiones, meta-CF₃-phenyl derivatives, carbamates, quinolinecarboxylic acid and its derivatives, chloroacetanilides, cyclohexane-1,3-dione derivatives, diazines, dichloropropionic acid and its derivatives, dihydrobenzofurans, dihydrofuran-3-ones, dinitroanilines, dinitrophenols, diphenyl ethers, dipyridyls, halocarboxylic acids and their derivatives, ureas, 3-phenyluracils, imidazoles, imidazolinones, N-phenyl-3,4,5,6-tetrahydrophthalimides, oxadiazoles, oxiranes, phenols, aryloxy- and hetaryloxyphenoxypropionic esters, phenylacetic acid and its derivatives, 2-phenylpropionic acid and its derivatives, pyrazoles, phenylpyrazoles, pyridazines, pyridinecarboxylic acid and its derivatives, pyrimidyl ethers, sulfonamides, sulfonylureas, triazines, triazinones, triazolinones, triazolecarboxamides and uracils.

It may furthermore be advantageous to apply the novel crop protection formulations, alone or else concomitantly in combination with other herbicides, pesticides or fungicides, with the proviso that cinidon-ethyl is not included, in the form of a mixture with other crop protection agents, for example together with agents for controlling pests or phytopathogenic fungi or bacteria. Also of interest is the miscibility with mineral salt solutions, which are employed for treating nutritional and trace element deficiencies. Nonphytotoxic oils and oil concentrates may also be added.

### Administration of the novel solid crop protection formulations and the novel aqueous dispersion formulations

The solid crop protection formulations of the present invention can be used for example in the form of ready-to-spray aqueous solutions, powders, suspensions, also highly-concentrated aqueous, oily or other suspensions or dispersions, emulsions, oil dispersions, pastes, dusts, materials for scattering, or granules, by means of spraying, atomizing, dusting, scattering or watering. The use forms depend on the intended applications; in any case, the should ensure a very fine distribution of the active compounds according to the invention.

Preferably, the novel solid crop protection formulations are employed as aqueous dispersions and the aqueous dispersion formulations are formulated as mentioned above. Preferably, the solid crop protection formulations are suspended in an aqueous system at a pH-value as mentioned above and administered to a cultivated plant, its periphery and/or or its seeds without any further additives.

The administration of said aqueous dispersion formulations, which is usually carried out by spraying with a spraying machine, is known in the art.

The solid crop protection formulations may be delivered to the user (in general a farmer) in a container selected from the group consisting of bottles, cans or bags made of a chemically resistant synthetic material, for example high density polyethylene, polyamide, polyesters etc. Said container may be made of a material which is water soluble, for example bags made of a synthetic material comprising polyvinyl alcohol or polyvinyl acetat.

Usually, the solid crop protection formulations of the present invention are redispersed in an aqueous system before use. The redispersion is usually carried out by the farmer.

The rates of application of the crop protection agent are from 0.001 to 3.0, preferably 0.01 to 1.0, kg/ha of active substance (a.s.), depending on the control target, the season, the target plants and the growth stage.

### Use of the crop protection formulations of the present invention

The crop protection formulations of the present invention are very useful as herbicidal compositions; pesticidal compositions and/or fungicidal compositions, depending on the crop protection agent or mixture of two or more crop protection agents employed.

### Herbicidal compositions:

One embodiment of the present invention is therefore a process for controlling undesired plant growth comprising the step of administrating the novel solid crop protection formulation or dispersion formulation as decribed above, wherein the at least one crop protection agent is a herbicide, to a cultivated plant, its periphery (living space) and/or its seeds and the use of said novel solid crop protection formulations or dispersion formulations in agriculture.

The crop protection formulations are very useful for controlling undesired plant growth in not cultivated areas. Said crop protection formulations are also very effective against weeds and damaging herbages in populations like wheat, rice, corn, soy, and cotton without damage of the crop. This effect is especially considerable by employing the crop protection formulations in low amounts.

The crop protection formulations of the present invention are also useful for controlling undesired plant growth in other crops like Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinionensis, Citrus limon, Citrus sinensis, Coffea arabica (Coffea canephora, Coffea liberica), Cucumis sativus, Cynodon dactylon, Daucus carota, Elaeis quineensis, Fragaria vesca, Glycine max, Gossypium hirsutum, (Gossypium arboreum, Gossypium herbaceum, Gossypium vitifolium), Heliantus annuus, Hevea brasiliensis, Hordeum vulgare, Humulus lupulus, Iponmoea batatas, Juglans regia, Lens culinaris, Linum usitatissimum, Lycopersicon lycopersicum, Malus spec., Manihot esculenta, Medicago sativa, Musa spec., Nicotiana tabacum (N. rustica), Olea europaea, Oryza sativa, Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera, Zea mays.

Additionally, the protection formulations of the present invention are useful in populations which tolerate the effect of herbicides because of breeding including genetic methods.

Moreover, the crop protection formulations of the present invention are also suitable for the desiccation and/or defoliation of plants.

As desiccants, they are suitable, in particular, for desiccating the aerial parts of crop plants such as potatoes, oilseed rape, sunflowers and soybeans. This allows completely mechanical harvesting of these important crop plants.

Also of economic interest is the facilitation of harvesting, which is made possible by dehiscence, or reduction of the adherence to the tree, both concentrated over a period of time, in citrus fruit, olives or other species and varieties of pomaceous fruit, stone fruit and nuts. The same mechanism, ie. the promotion of the formation of abscission tissue between fruit of leaf and shoot of the plants, is also important for readily controllable defoliation of useful plants, in particular cotton.

Moreover, shortening the period within which the individual cotton plants mature results in improved fiber quality after harvesting.

The novel crop protection formulations or the (herbicidal compositions) can be applied pre- or post-emergence. If the active compounds are less well tolerated by certain crop plants, application techniques may be used in which the herbicidal compositions are sprayed, with the aid of the spraying equipment, in such a way that they come into as little contact as possible, if any, with the leaves of the sensitive crop plants, while the active compounds reach the leaves of undesirable plants growing underneath, or the bare soil surface (post-directed, lay-by).

### Pesticidal compositions

Moreover, the crop protection formulations of the present invention are suitable for efficiently controlling animal pests from the classes of the insects, arachnids and nematodes. They can be employed in crop protection and in the hygiene, stored-product and veterinary sector for controlling animal pests.

A preferred embodiment of the present invention is therefore a process for controlling animal pests from the classes of the insects, arachnids and nematodes comprising the step of administrating the novel solid crop protection formulation or dispersion formulation as described above, wherein the at least one crop protection agent is a pesticide, to a cultivated plant, its periphery (living space) and/or its seeds.

In particular, the crop protection formulations of the present invention, wherein the at least one crop protection agent is a pesticide, are suitable for controlling the following animal pests:
insects from the order of the lepidopterans (Lepidoptera), for example Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena, scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis, beetles (Coleoptera), for example Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma triiurcata, Ceuthorrhynchus assimilis, Ceuthorrhynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus and Sitophilus granaria, dipterans (Diptera), for example Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea and Tipula paludosa, thrips (Thysanoptera), e.g. Frankliniella fusca, Frankliniella occidentalis, Franldiniella tritici, Scirtothrips citri, Thrips oryzae, Thrips palmi and Thrips tabaci, hymenopterans (Hymenoptera), e.g. Athalia rosae, Atta cephalotes, Atta sexdens, Atta texana, Hoplocampa minuta, Hoplocampa testudinea, Monomorium pharaonis, Solenopsis geminata and Solenopsis invicta, heteropterans (Heteroptera), e.g. Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis and Thyanta perditor, homopterans (Homoptera), e.g. Acyrthosiphon onobrychis, Adelges laricis, Aphidula nasturtii, Aphis fabae, Aphis pomi, Aphis sambuci, Brachycaudus cardui, Brevicoryne brassicae, Cerosipha gossypii, Dreyfusia nordmannianae, Dreyfusia piceae, Dysaphis radicola, Dysaulacorthum pseudosolani, Empoasca fabae, Macrosiphum avenae, Macrosiphum euphorbiae, Macrosiphon rosae, Megoura viciae, Metopolophium dirhodum, Myzodes persicae, Myzus cerasi, Nilaparvata lugens, Pemphigus bursarius, Perkinsiella saccharicida, Phorodon humuli, Psylla mali, Psylla piri, Rhopalomyzus ascalonicus, Rhopalosiphum maidis, Sappaphis mala, Sappaphis mali, Schizaphis graminum, Schizoneura lanuginosa, Trialeurodes vaporariorum and Viteus vitifolii, termites (Isoptera), e.g. Calotermes flavicollis, Leucotermes flavipes, Reticulitermes lucifugus und Termes natalensis, orthopterans (Orthoptera), e.g. Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus and Tachycines asynamorus, Arachnoidea, such as arachnids (Acarina), e.g. Amblyomma americanum, Amblyomma variegatum, Argas persicus, Boophilus annulatus, Boophilus decoloratus, Boophilus microplus, Brevipalpus phoenicis, Bryobia praetiosa, Dermacentor silvarum, Eotetranychus carpini, Eriophyes sheldoni, Hyalomma truncatum, Ixodes ricinus, Ixodes rubicundus, Ornithodorus moubata, Otobius megnini, Paratetranychus pilosus, Dermanyssus gallinae, Phyllocoptruta oleivora, Polyphagotarsonemus latus, Psoroptes ovis, Rhipicephalus appendiculatus, Rhipicephalus evertsi, Sarcoptes scabiei, Tetranychus cinnabarinus, Tetranychus kanzawai, Tetranychus pacificus, Tetranychus telarius and Tetranychus urticae, nematodes such as root knot nematodes, e.g. Meloidogyne hapla, Meloidogyne incognita, Meloidogyne javanica, cyst-forming nematodes, e.g. Globodera rostochiensis, Heterodera avenae, Heterodera glycines, Heterodera schachtii, Heterodera trifolii, stem eelworms and foliar nematodes, e.g. Belonolaimus longicaudatus, Ditylenchus destructor, Ditylenchus dipsaci, Heliocotylenchus multicinctus, Longidorus elongatus, Radopholus similis, Rotylenchus robustus, Trichodorus primitivus, Tylenchorhynchus claytoni, Tylenchorhynchus dubius, Pratylenchus neglectus, Pratylenchus penetrans, Pratylenchus curvitatus and Pratylenchus goodeyi.

The rate of application of active ingredient for controlling animal pests is from 0.1 to 2.0, preferably 0.2 to 1.0, kg/ha under field conditions.

### Fungicidal compositions

The crop protection formulations of the present inventions are also suitable as fungicidal compositions. They have outstanding activity against a broad spectrum of phytopathogenic fungi, in particular from the classes of the Ascomycetes, Deuteromycetes, Phycomycetes and Basidiomycetes.

A preferred embodiment of the present invention is therefore a process for controlling phytopathogenic fungi on crop plants comprising the step of administrating the novel solid crop protection formulation or dispersion formulation as described above, wherein the at least one crop protection agent is a fungicide, to a cultivated plant, its periphery (living space) and/or its seeds. Some of them act systemically, and they can be employed in crop protection as foliar- and soil-acting fungicides.

They are especially important for controlling a large number of fungi on a variety of crop plants such as wheat, rye, barley, oats, rice, maize, grass, bananas, cotton, soya, coffee, sugar cane, grapevines, fruit species, ornamentals and vegetables such as cucumbers, beans, tomatoes, potatoes and cucurbits, and on the seeds of these plants.

Specifically, they are suitable for controlling the following plant diseases:
- Alternaria species, Podosphaera species, Sclerotinia species, Physalospora canker on vegetables and fruit,
- Botrytis cinerea (gray mold) an strawberries, vegetables , ornamentals and grapevines,
- Corynespora cassiicola on cucumbers,
- Colletotrichum species on fruit and vegetables,
- Diplocarpon rosae on roses,
- Elsinoe fawcetti and Diaporthe citri on citrus fruit,
- Sphaerotheca species on cucurbits, strawberries and roses,
- Cercospora species on peanuts, sugar beets and aubergines,
- Erysiphe cichoracearum on cucurbits,
- Leveillula taurica on paprika, tomatoes and aubergines,
- Mycosphaerella species on apples and japanese apricot,
- Phyllactinia kakicola, Gloesporium kaki on japanese apricot,
- Gymnosporangium yamadae, Leptothyrium pomi, Podosphaera leucotricha and Gloedes pomigena on apples,
- Cladosporium carpophilum on pears and japanese apricot,
- Phomopsis species on pears,
- Phytophthora species on citrus fruit, potatoes, onions, especially Phytophthora infestans on potatoes and tomatoes,
- Blumeria graminis (powdery mildew) on cereals,
- Fusarium- and Verticillium species on various plants,
- Glomerella cingulata on tee,
- Drechslera- and Bipolaris species on cereals and rice,
- Mycosphaerella species on bananas and peanuts,
- Plasmopara viticola on grapevines,
- Personospora species on onions, spinach and Chrysantemen,
- Phaeoisariopsis vitis and Sphaceloma ampelina on grapefruits,
- Pseudocercosporella herpotrichoides on wheat and barley,
- Pseudoperonospora species on hop and cucumbers,
- Puccinia species and Typhula species on cereals and turf,
- Pyricularia oryzae on rice,
- Rhizoctonia species on cotton, rice and turf,
- Stagonospora nodorum and Septoria tritici on wheat,
- Uncinula necator on grapevines,
- Ustilago species on cereals and sugar cane, and
- Venturia species (scab) on apples and pears.

Moreover, the crop protection formulations of the present invention are suitable for controlling harmful fungi such as Paecilomyces variotii in the protection of materials (e.g. wood, paper, paint dispersions, fibers and tissues) and in the protection of stored products.

The crop protection formulations of the present invention (fungicidal compositions) are applied by treating the fungi, or the plants, seeds, materials or the soil to be protected against fungal infection, with a fungicidally active amount of the active ingredients (crop protection agents). Application can be effected both before and after infection of the materials, plants or seeds by the fungi.

In general, the fungicidal compositions comprise from 0.1 to 95, preferably 0.5 to 90, % by weight of active ingredient (crop protection agent).

When used in crop protection, the rates of application are from 0.01 to 2.0 kg of active ingredient per ha, depending on the nature of the effect desired.

In the treatment of seed, amounts of active ingredient of from 0.001 to 0.1 g, preferably 0.01 to 0.05 g, are generally required per kilogram of seed.

When used in the protection of materials or stored products, the rate of application of active ingredient depends on the nature of the field of application and on the effect desired. Rates of application conventionally used in the protection of materials are, for example, from 0.001 g to 2 kg, preferably 0.005 g to 1 kg, of active ingredient per cubic meter of material treated.

The examples which follow further illustrate the invention.

### Examples

### Preparation of the copolymer

### Example 1

### Preparation of the polymer A

A reaction vessel (1000 ml) fitted with a reflux condenser was charged with 496.15 g of dimethyl formamide (DMF), 2.4 g of azobisisobutyronitrile (AIBN) and 217.95 g of demineralized water and exposed to nitrogen for 30 minutes. A mixture of 20.46 g vinyl acetate, 22.09 g of styrene, 4.3 5 g of methyl acrylate, and 21.18 g of DMAPMAM (dimethylaminopropyl methacrylic amide) was added. The reaction mixture was heated in an oil bath to 95°C under stirring. After 18 h at 95°C the reaction mixture was cooled down to 70°C and concentrated in vacuo at the rotavap and subsequently dried at 85°C in vacuo for 96 h. More than 34 g of a slightly colored resin was obtained.

### Example 2

### Preparation of the polymer B

A reaction vessel (1000 ml) fitted with a reflux condenser was charged with 437.9 g of dimethyl formamide (DMF) and 190.7 g of demineralized water and exposed to nitrogen for 30 minutes. A mixture of 2.1 g of azobisisobutyronitrile (AIBN), 30.11 g of styrene and 39.89 g of DMAPMAM (dimethylaminopropyl methacrylic amide) was added. The reaction mixture was heated in an oil bath to 95°C under stirring. After 18 h at 95°C the reaction mixture was cooled down to 70°C and concentrated in vacuo at the rotavap and subsequently dried at 85°C in vacuo for 96 h. More than 32 g of a slightly colored resin was obtained.

### Preparation of the solid crop protection formulation and the aqueous dispersion formulation

### Average particle sizes (by Fiber Optic DLS measurements)

Average particle sizes were determined in a fiber optic dynamic light scattering apparatus. Samples were diluted to approximately 0.005 wt% solids in the appropriate carrier aqueous solution. Particle sizes and PDI (polydispersity index) values were determined by second order cumulant analysis and are reported in terms of hydrodynamic radius (r_{H}).

### Example 3:

### a) Solid crop protection formulation by the "solid solution route"

200 g of a copolymer solution of the polymer A (prepared in example 1) in dimethyl formamide (DMF) were mixed with 200 g of a solution (4%-wt) of the crop protection agent in dimethyl formamide (DMF). The solution obtained is homogenized and subsequently spray dried to give 15 g of a powder formulation.

### b) Aqueous dispersion formulation

Said powder (15 g) was dispersed in 750 g of an aqueous solution which was buffered to pH 7. A turbid dispersion was obtained. The average particle size was 80 nm (r_{H}).

### Examples of use

The herbicidal action of the novel crop protection formulations was demonstrated by the following greenhouse experiments:

The culture containers used were plastic flowerpots containing loamy sand with approximately 3.0% of humus as substrate. The seeds of the test plants were sown separately for each species.

For the pre-emergence treatment, solid crop protection formulations, suspended or emulsified in water, were applied directly after sowing by means of finely distributing nozzles. The containers were irrigated gently to promote germination and growth and subsequently covered with transparent plastic hoods until the plants had rooted. This cover caused uniform germination of the test plants unless this was adversely affected by the crop protection agents.

For the post-emergence treatment, the test plants were grown to a plant height of from 3 to 15 cm, depending on the plant habit, and only then treated with the crop protection agents which had been suspended or emulsified in water. To this end, the test plants were either sown directly and grown in the same containers, or they were first grown separately as seedlings and transplanted into the test containers a few days prior to treatment.

Depending on the species, the plants were kept at from 10 to 25°C and 20 to 35°C, respectively. The test period extended over 2 to 4 weeks. During this time, the plants were tended, and their response to the individual treatments was evaluated.

Untreated control plants did not show any herbicidal damage.

### Desiccation and defoliation

The test plants used were young cotton plants with 4 leaves (without cotyledons) which had been grown under greenhouse conditions (relative atmospheric humidity: 50 to 70 %; day/ night temperature 27/20°C).

The young cotton plants were subjected to foliar treatment to runoff point with aqueous preparations of the solid crop protection formulation with an addition of 0.15% by weight of the fatty alcohol alkoxide Plurafac LF 700, based on the spray mixture. The amount of water applied was 1000 1/ha (converted).

No leaves were shed in the untreated control plants.

## Claims

1. A solid crop protection formulation comprising
a) at least one crop protection agent selected from the group consisting of herbicides, pesticides and, fungicides, with the proviso that cinidon-ethyl is not included;
b) at least one random radical copolymer essentially consisting of
1. 30 to 60 % by weight of styrene as component A;
2. 30 to 60 % by weight of DMAPMAM (dimethylaminopropyl methacrylic amide) as component B;
3. 0 to 60 % by weight of methyl acrylate and/or vinyl acetate as component C and
c) optionally further additives,
wherein at least 50 % of the dispersed particles of the at least one crop protection agent in said solid crop protection formulation are in an X-ray amorphous state.

2. A dispersion formulation comprising
a) at least one crop protection agent selected from the group consisting of herbicides, pesticides and fungicides, with the proviso that cinidon-ethyl is not included, and
b) at least one random radical copolymer essentially consisting of
1. 30 to 60 % by weight of styrene as component A;
2. 30 to 60 % by weight of DMAPMAM (dimethylaminopropyl methacrylic amide) as component B;
3. 0 to 60 % by weight of methyl acrylate and/or vinyl acetate as component C,
c) optionally further additives, and
d) an aqueous system.

3. The dispersion formulation as claimed in claim 2, wherein the average particle size in terms of hydrodynamic radius of said dispersed particles of the crop protection agent in said dispersion formulation is from 10 to 500 nm.

4. The dispersion formulation as claimed in claim 2 or 3, wherein the polydispersity index of said dispersed particles of the at least one crop protection agent in said dispersion formulation is from 0.04 to 0.8.

5. The dispersion formulation as claimed in any of claims 2 to 4, wherein the ratio of said copolymer to the at least one crop protection agent is from 10 : 1 to 1 : 10. -

6. A process for preparing a solid crop protection formulation as daimed in claim 1, comprising the steps of
a) mixing a solution of at least one random radical copolymer as defined in claim 1 comprising as polymerized units at least one hydrophilic and at least one hydrophobic monomer in at least one first organic solvent and a solution of at least one crop protection agent selected from the group consisting of herbicides, pesticides and fungicides, with the proviso that cinidon-ethyl is not included, in at least one second organic solvent which may be the same as or different from said first organic solvent; or dissolving a mixture of at least one random radical copolymer comprising as polymerized units at least one hydrophilic and at least one hydrophobic monomer and the at least one crop protection agent in at least one organic solvent; wherein optionally further additives may be added to the organic solvent(s); and
b) removing the organic solvent(s) e.g. by spray drying, vacuum drying, lyophilization or in a fluidized bed dryer.

7. A process for preparing a solid crop protection formulation as claimed in claim 1, comprising the steps of
a) mixing a solution of at least one crop protection agent selected from the group consisting of herbicides, pesticides and fungicides, with the proviso that cinidon-ethyl is not included, in at least one organic solvent which is miscible with water and an aqueous solution of at least one random radical copolymer as defined in claim 1 comprising as polymerized units at least one hydrophilic monomer and at least one hydrophobic monomer, wherein optionally further additives may be added to the organic solution and/or to the aqueous solution and the mixing is performed by high energy agitation, whereby the crop protection formulation is obtained in form of a dispersion; and
b) removing the water and the organic solvent(s) e.g. by spray drying, vacuum drying, lyophilization or in a fluidized bed dryer.

8. A process for preparing a dispersion formulation as claimed in any of claims 2 to 5, comprising the steps of
a) mixing a solution of at least one crop protection agent selected from the group consisting of herbicides, pesticides and fungicides, with the proviso that cinidon-ethyl is not included, in at least one organic solvent which is miscible with water and an aqueous solution of at least one random radical copolymer as defined in claim 1 comprising as polymerized units at least one hydrophilic monomer and at least one hydrophobic monomer, wherein optionally further additives may be added to the organic solution and/or to the aqueous solution and the mixing is performed by high energy agitation, whereby the crop protection formulation is obtained in form of a dispersion; and
b) removing the organic solvent(s).

9. A process for preparing a dispersion formulation as claimed in any of claims 2 to 5, comprising the step of dispersing the solid crop protection formulation as claimed in any of claims 1 to 5 in an aqueous system.

10. A process for controlling undesired plant growth comprising the step of administrating the novel solid crop protection formulation as daimed in claim 1, or the novel dispersion formulation as claimed in any of claims 2 to 5, wherein the at least one crop protection agent is a herbicide, to a cultivated, plant, its periphery (living space) and/or its seeds.

11. A process for controlling animal pests from the classes of the insects, arachnids and nematodes comprising the step of administrating the novel solid crop protection formulation as claimed in claim 1, or the novel dispersion formulation as claimed in any of claims 2 to 5, wherein the at least one crop protection agent is a pesticide, to a cultivated plant, its periphery (living space) and/or its seeds.

12. A process for controlling phytopathogenic fungi on crop plants comprising the step of administrating the novel solid crop protection formulation as claimed in claim 1, or the novel dispersion formulation as claimed in any of claims 2 to 5, wherein the at least one crop protection agent is a fungicide, to a cultivated plant, its periphery (living space) and/or its seeds.

13. Use of the solid crop protection formulation as claimed in claim 1 as herbicidal composition, pesticidal composition and/or fungicidal composition.

## Patentansprüche

1. Feste Pflanzenschutzmittelformulierung, die folgendes umfaßt:
a) mindestens ein Pflanzenschutzmittel aus der Gruppe Herbizide, Pestizide und Fungizide, mit der Maßgabe, daß Cinidon-ethyl nicht mitverwendet wird;
b) mindestens ein statistisches radikalisches Copolymer, das im wesentlichen aus
1. 30 bis 60 Gew.-% Styrol als Komponente A;
2. 30 bis 60 Gew.-% DMAPMAM (Dimethylaminopropylmethacrylamid) als Komponente B;
3. 0 bis 60 Gew.-% Methylacrylat und/oder Vinylacetat als Komponente C
besteht, sowie
c) gegebenenfalls weitere Zusatzstoffe,
wobei mindestens 50% der dispergierten Partikel des miridestens einen Pflanzenschutzmittels in der festen Pflanzenschutzmittelformulierung im röntgenamorphen Zustand vorliegen.

2. Feste Dispersionsformulierung, die folgendes umfaßt:
a) mindestens ein Pflanzenschutzmittel aus der Gruppe Herbizide, Pestizide und Fungizide, mit der Maßgabe, daß Cinidon-ethyl nicht mitverwendet wird;
b) mindestens ein statistisches radikalisches Copolymer, das im wesentlichen aus
1. 30 bis 60 Gew.-% Styrol als Komponente A;
2. 30 bis 60 Gew.-% DMAPMAM (Dimethylaminopropylmethacrylamid) als Komponente B;
3. 0 bis 60 Gew.-% Methylacrylat und/oder Vinylacetat als Komponente C
besteht, sowie
c) gegebenenfalls weitere Zusatzstoffe, sowie
d) ein wäßriges System.

3. Dispersionsformulierung nach Anspruch 2, wobei die als hydrodynamischer Radius ausgedrückte Partikelgröße dieser dispergierten Partikel des Pflanzenschutzmittels in der Dispersionsformulierung 10 bis 500 nm beträgt.

4. Dispersionsformulierung nach Anspruch 2 oder 3, wobei der Polydispersitätsindex der dispergierten Partikel in dem mindestens einen Pflanzenschutzmittel in der Dispersionsformulierung 0,04 bis 0,8 beträgt.

5. Dispersionsformulierung nach einem der Ansprüche 2 bis 4, wobei das Verhältnis zwischen dem Copolymer und dem mindestens einen Pflanzenschutzmittel 10:1 bis 1:10 beträgt.

6. Verfahren zur Herstellung einer festen Pflanzenschutzmittelformulierung nach Anspruch 1, das die folgenden Schritte umfaßt:
a) Mischen einer Lösung von mindestens einem statistischen radikalischen Copolymer gemäß Anspruch 1, das als polymerisierte Einheiten mindestens ein hydrophiles und mindestens ein hydrophobes Monomer in mindestens einem ersten organischen Lösungsmittel und eine Lösung von mindestens einem Pflanzenschutzmittel aus der Gruppe Herbizide, Pestizide und Fungizide, mit der Maßgabe, daß Cinidon-ethyl nicht mitverwendet wird, in mindestens einem zweiten organischen Lösungsmittel, das mit dem ersten organischen Lösungsmittel identisch oder davon verschieden sein kann, umfaßt; oder Lösen einer Mischung von mindestens einem statistischen radikalischen Copolymer, das als polymerisierte Einheiten mindestens ein hydrophiles und mindestens ein hydrophobes Monomer und das mindestens eine Pflanzenschutzmittel in mindestens einem organischen Lösungsmittel umfaßt; wobei das/die organische(n) Lösungsmittel gegebenenfalls mit weiteren Zusatzstoffen versetzt werden kann/können; sowie
b) Entfernen des/der organischen Lösungsmittel(s), z.B. durch Sprühtrocknung, Vakuumtrocknung, Lyophilisierung oder im Wirbelbetttrockner.

7. Verfahren zur Herstellung einer festen Pflanzenschutzmittelformulierung nach Anspruch 1, das die folgenden Schritte umfaßt:
a) Mischen einer Lösung von mindestens einem Pflanzenschutzmittel aus der Gruppe Herbizide, Pestizide und Fungizide, mit der Maßgabe, daß Cinidon-ethyl nicht mitverwendet wird, in mindestens einem mit Wasser mischbarem organischen Lösungsmittel und einer wäßrigen Lösung von mindestens einem statistischen radikalischen Copolymer gemäß Anspruch 1, das als polymerisierte Einheiten mindestens ein hydrophiles Monomer und mindestens ein hydrophobes Monomer umfaßt, wobei die organische Lösung und/oder die wäßrige Lösung gegebenenfalls mit weiteren Zusatzstoffen versetzt werden kann und das Mischen durch Hochleistungsrühren erfolgt, wodurch die Pflanzenschutzmittelformulierung in Form einer Dispersion anfällt; sowie
b) Entfernen des/der organischen Lösungsmittel(s), z.B. durch Sprühtrocknung, Vakuumtrocknung, Lyophilisierung oder im Wirbelbetttrockner.

8. Verfahren zur Herstellung einer Dispersionsformulierung nach einem der Ansprüche 2 bis 5, das die folgenden Schritte umfaßt:
a) Mischen einer Lösung von mindestens einem Pflanzenschutzmittel aus der Gruppe Herbizide, Pestizide und Fungizide, mit der Maßgabe, daß Cinidon-ethyl nicht mitverwendet wird, in mindestens einem mit Wasser mischbarem organischen Lösungsmittel und einer wäßrigen Lösung von mindestens einem statistischen radikalischen Copolymer gemäß Anspruch 1, das als polymerisierte Einheiten mindestens ein hydrophiles Monomer und mindestens ein hydrophobes Monomer umfaßt, wobei die organische Lösung und/oder die wäßrige Lösung gegebenenfalls mit weiteren Zusatzstoffen versetzt werden kann und das Mischen durch Hochleistungsrühren erfolgt, wodurch die Pflanzenschutzmittelformulierung in Form einer Dispersion anfällt; sowie
b) Entfernen des/der organischen Lösungsmittel (s).

9. Verfahren zur Herstellung einer Dispersionsformulierung nach einem der Ansprüche 2 bis 5, das den Schritt des Dispergierens der festen Pflanzenschutzmittelformulierung nach einem der Ansprüche 1 bis 5 in einem wäßrigen System umfaßt.

10. Verfahren für die Bekämpfung von unerwünschtem Pflanzenwachstum, das den Schritt des Ausbringens der neuen festen Pflanzenschutzmittelformulierung nach Anspruch 1 oder der neuen Dispersionsformulierung nach einem der Ansprüche 2 bis 5, wobei das mindestens eine Pflanzenschutzmittel ein Herbizid ist, auf eine kultivierte Pflanze, ihre Umgebung (ihren Lebensraum) und/oder ihre Samen umfaßt.

11. Verfahren zur Bekämpfung von tierischen Schädlingen aus den Klassen Insekten, Arachnida und Nematoden, das den Schritt des Ausbringens der neuen festen Pflanzenschutzmittelformulierung nach Anspruch 1 oder der neuen Dispersionsformulierung nach einem der Ansprüche 2 bis 5, wobei das mindestens eine Pflanzenschutzmittel ein Insektizid ist, auf eine kultivierte Pflanze, ihre Umgebung (ihren Lebensraum) und/oder ihre Samen umfaßt.

12. Verfahren zur Bekämpfung von phytopathogenen Pilzen an Kulturpflanzen, das den Schritt des Ausbringens der neuen festen Pflanzenschutzmittelformulierung nach Anspruch 1 oder der neuen Dispersionsformulierung nach einem der Ansprüche 2 bis 5, wobei das mindestens eine Pflanzenschutzmittel ein Fungizid ist, auf eine kultivierte Pflanze, ihre Umgebung (ihren Lebensraum) und/oder ihre Samen umfaßt.

13. Verwendung der festen Pflanzenschutzmittelformulierung nach Anspruch 1 als herbizide Zusammensetzung, pestizide Zusammensetzung und/oder fungizide Zusammensetzung.

## Revendications

1. Formulation phytosanitaire solide, comprenant :
a) au moins un agent phytosanitaire choisi dans le groupe constitué des herbicides, des pesticides et des fongicides à condition que le cinidon-éthyle ne soit pas inclus;
b) au moins un copolymère radicalaire aléatoire constitué essentiellement de :
1. 30 à 60% en poids de styrène comme composant A;
2. 30 à 60% en poids de DMAPMAM (amide diméthyl-aminopropylmétharylique) comme composant B;
3. 0 à 60% en poids d'acrylate de méthyle et/ou d'acétate de vinyle comme composant C; et
c) éventuellement d'autres additifs,
dans laquelle au moins 50% des particules dispersées du au moins un agent phytosanitaire dans ladite formulation phytosanitaire sont dans un état amorphe aux rayons X.

2. Formulation de dispersion comprenant :
a) au moins un agent phytosanitaire choisi dans le groupe constitué des herbicides, des pesticides et des fongicides à condition que le cinidon-éthyle ne soit pas inclus; et
b) au moins un copolymère radicalaire aléatoire constitué essentiellement de :
1. 30 à 60% en poids de styrène comme composant A;
2. 30 à 60% en poids de DMAPMAM (amide diméthylaminopropylméthacrylique) comme composant B;
3. 0 à 60% en poids d'acrylate de méthyle et/ou d'acétate de vinyle comme composant C;
c) éventuellement d'autres additifs, et
d) un système aqueux.

3. Formulation de dispersion selon la revendication 2, dans laquelle la taille moyenne des particules en termes de rayon hydrodynamique desdites particules dispersées de l'agent phytosanitaire dans ladite formulation de dispersion est de 10 à 500 nm.

4. Formulation de dispersion selon la revendication 2 ou la revendication 3, dans laquelle l'indice de polydispersité desdites particules dispersées du au moins un agent phytosanitaire dans ladite formulation de dispersion est de 0,04 à 0,8.

5. Formulation de dispersion selon l'une quelconque des revendications 2 à 4, dans laquelle le rapport dudit copolymère au au moins un agent phytosanitaire est de 10:1 à 1:10.

6. Procédé pour préparer une formulation solide phytosanitaire selon la revendication 1, comprenant les étapes suivantes :
a) on mélange une solution d'au moins un copolymère radicalaire aléatoire, comme défini dans la revendication 1, comprenant sous la forme d'unités polymérisées au moins un monomère hydrophile et au moins un monomère hydrophobe dans au moins un premier solvant organique et une solution d'au moins un agent phytosanitaire choisi dans le groupe constitué des herbicides, des pesticides et des fongicides, à condition que le cinidon-éthyle ne soit pas inclus, dans au moins un deuxième solvant organique qui peut être identique audit premier solvant organique ou différent de celui-ci; ou on dissout un mélange d'au moins un copolymère radicalaire aléatoire comprenant sous la forme d'unités polymérisées au moins un monomère hydrophile et au moins un monomère hydrophobe et du au moins un agent phytosanitaire dans au moins un solvant organique, d'autres additifs pouvant éventuellement être ajoutés au(x) solvant(s) organique(s); et
b) on élimine le ou les solvants organiques, par exemple, par séchage par pulvérisation, séchage sous vide, lyophilisation ou dans un sécheur en lit fluidisé.

7. Procédé de préparation d'une formulation phytosanitaire solide selon la revendication 1, comprenant les étapes suivantes :
a) on mélange une solution d'au moins un agent phytosanitaire choisi dans le groupe constitué des herbicides, des pesticides et des fongicides, à condition que le cinidon-éthyle ne soit pas inclus, dans au moins un solvant organique qui est miscible à l'eau et une solution aqueuse d'au moins un copolymère radicalaire aléatoire comme défini dans la revendication 1, comprenant sous la forme d'unités polymérisées au moins un monomère hydrophile et au moins un monomère hydrophobe, d'autres additifs pouvant éventuellement être ajoutés à la solution organique et/ou à la solution aqueuse et le mélange est effectué par agitation sous énergie élevée, ce qui permet ainsi d'obtenir la formulation phytosanitaire sous la forme d'une dispersion; et
b) on élimine l'eau et le ou les solvants organiques par exemple par séchage par pulvérisation, séchage sous vide, lyophilisation ou dans un séchoir en lit fluidisé.

8. Procédé pour préparer une formulation de dispersion selon l'une quelconque des revendications 2 à 5, comprenant les étapes suivantes :
a) on mélange une solution d'au moins un agent phytosanitaire choisi dans le groupe constitué des herbicides, des pesticides et des fongicides, à condition que le cinidon-éthyle ne soit pas inclus, dans au moins un solvant organique qui est miscible à l'eau et une solution aqueuse d'au moins un copolymère radicalaire aléatoire comme défini dans la revendication 1, comprenant sous la forme d'unités polymérisées au moins un monomère hydrophile et au moins un monomère hydrophobe, d'autres additifs pouvant éventuellement être ajoutés à la solution organique et/ou à la solution aqueuse et le mélange est effectué par agitation sous énergie élevée, la formulation phytosanitaire étant ainsi obtenue sous la forme d'une dispersion; et
b) on élimine le ou les solvants organiques.

9. Procédé pour préparer une formulation de dispersion selon l'une quelconque des revendications 2 à 5, comprenant l'étape de dispersion de la formulation phytosanitaire solide selon l'une quelconque des revendications 1 à 5 dans un système aqueux.

10. Procédé de contrôle de la croissance non souhaitée de végétaux comprenant l'étape d'administration de la nouvelle formulation phytosanitaire solide selon la revendication 1 ou de la nouvelle formulation de dispersion selon l'une quelconque des revendications 2 à 5, le au moins un agent phytosanitaire étant un herbicide, à une plante cultivée, à sa périphérie (espace vivant) et/ou à ses semences.

11. Procédé de contrôle de parasites animaux des classes des insectes, des arachnides et des nématodes, comprenant l'étape d'administration de la nouvelle formulation phytosanitaire solide selon la revendication 1 ou de la nouvelle formulation de dispersion selon l'une quelconque des revendications 2 à 5, le au moins un agent phytosanitaire étant un pesticide, à une plante cultivée, à sa périphérie (espace vivant) et/ou à ses semences.

12. Procédé de contrôle de champignons phytopathogènes sur des plantes de culture, comprenant l'étape d'administration de la nouvelle formulation phytosanitaire solide selon la revendication 1 ou de la nouvelle formulation de dispersion selon l'une quelconque des revendications 2 à 5, le au moins un agent phytosanitaire étant un fongicide, à une plante cultivée, à sa périphérie (espace vivant) et/ou à ses semences.

13. Utilisation de la formulation phytosanitaire solide selon la revendication 1 comme composition herbicide, composition pesticide et/ou composition fongicide.
